# EUROPEAN PATENT APPLICATION

(11) **EP 1 231 444 A2**
(43) Date of publication of application: **14.08.2002**
(21) Application number: 02001983.2
(22) Date of filing: 04.02.2002
(51) Int. Cl.: F27B 9/30, F27B 9/40

(54) **Thermal treatment kiln, particularly for ceramic articles**

(30) Priority: 08.02.2001 IT MO010018
(71) Applicant: IPEG S.p.A. dell'Ing. Mauro Poppi, 42014 Castellarano (IT)
(72) Inventor: Poppi, Mauro, 41049 Sassuolo (Modena) (IT)
(74) Representative: Modiano, Guido, Dr.-Ing.

(57) **Abstract**

A thermal treatment kiln, particularly for ceramic articles, comprises a structure (S) for supporting at least one first sector (2) and one second sector (3) inside which a first step and a second step, respectively, of the thermal treatment are performed, said sectors (2, 3) being consecutive and being crossed in succession by the ceramic articles, the first (2) and second (3) sectors being separated and comprising a first aspirator system (5) and a second aspirator system (6), which are adapted for the differentiated treatment of the gases generated respectively in the first sector (2) and in the second sector (3), and gas discharge means (7).

## Description

The present invention relates to a thermal treatment kiln, particularly for ceramic articles.

Continuous kilns are known which are used for the thermal treatment for firing ceramic articles such as for example tiles and are substantially constituted by a continuous tunnel inside which the ceramic articles, which advance along a conveyance line, are gradually subjected to the successive steps of the treatment.

Conventional kilns have, in their first regions, a system for aspirating and discharging, by means of a vent stack, the gases generated inside them.

The aspirated and discharged gases are constituted by a mixture of indistinct gaseous fractions of various kinds and origins, generated during the various steps of the treatment; the mixture in fact contains the combustion products of the burners distributed along said kilns and the gaseous substances that are generated and released into the internal atmosphere of the kilns as a consequence of the transformations and/or reactions to which the components of the ceramic articles are subjected during the thermal treatment.

The gases contain pollutants such as, for example, nitrogen oxides (NOx), carbon monoxide (CO), some hydrocarbons (CxHyO) and compounds of fluorine (F).

It has been ascertained that these pollutants are generated, to a greater extent and with the exception of fluorine, during the first steps of the treatment, the so-called "preheating" steps that precede the actual firing at high temperature, as a consequence of the reactions and transformations undergone by the components (raw materials, impurities, organic additives) of the articles.

The pollutants are currently aspirated and discharged in diluted form, mixed with the gases generated in the subsequent firing step, which are mainly constituted by the combustion products of the burners and by the pollutants released at high temperature.

In order to limit the introduction of pollutants in the atmosphere, conventional kilns have a gas conditioning system arranged at the vent stack.

These conventional kilns are not devoid of drawbacks, including the fact that they cause atmospheric pollution and environmental damage; they in fact have emission conditioning systems that are specific only for some pollutants and introduce in the atmosphere gases that contain significant residual amounts of the pollutants not treated during conditioning.

These pollutants are mainly constituted by oxidizable substances emitted at low temperature, which would be subjected to the oxidation required to eliminate their toxicity only by means of a high-temperature combustion.

The incidence of these emissions on atmospheric pollution and on environmental damage is multiplied by the large-scale production of ceramic articles concentrated in a limited number of regions.

In order to obviate these drawbacks, kilns are known which are provided with a post-combustion system, possibly of the heat-recuperation type, i.e. of the regenerative or recuperative type or, as an alternative, with a catalytic oxidation system, into which the aspirated gases are conveyed, in order to burn and oxidize the pollutants contained therein, before they are discharged into the atmosphere through the stack.

However, even these conventional kilns are not devoid of drawbacks, including the fact that they have a high heat consumption and that their operation entails disadvantageously high costs for ceramics makers.

It is in fact noted that the volumes of gases treated by the post-combustion system are disproportionate with respect to the actual volumes of pollutants to be eliminated, which are generated predominantly during the preheating steps and are aspirated and discharged in a mixture, and therefore in diluted form, with the exhaust gases of the firing step.

Finally, post-combustion systems release hot gases at temperatures close to 1000 °C, and the heat content of said gases is lost or can possibly be recovered only partially by adopting post-combustion systems of the regenerative or recuperative type, which however allow a heat recuperation that is somewhat degraded by the low temperature of the resulting fluids and are complicated to build, difficult to run, and scarcely used in the ceramics sector.

The aim of the present invention is to eliminate the above noted drawbacks of known kilns by providing a thermal treatment kiln particularly for ceramic articles that allows to reduce effectively the presence of pollutants in the exhaust gases discharged into the atmosphere, to limit the impact and environmental damage related to the exhaust gases, to contain heat consumption and costs affecting ceramics makers.

Within this aim, an object of the present invention is to achieve the above aim with a structure that is simple, relatively easy to provide in practice, safe in use, effective in operation, and relatively low in cost.

This aim and this and other objects which will become better apparent hereinafter are achieved by the present thermal treatment kiln particularly for ceramic articles, which comprises a structure for supporting at least one first sector and one second sector inside which a first step and a second step, respectively, of said thermal treatment are performed, said sectors being consecutive and being crossed in succession by the ceramic articles, characterized in that said first and second sectors are separated one another and in that it comprises a first aspirator system and a second aspirator system, which are adapted for the differentiated treatment of the gases generated respectively in said first sector and in said second sector, and gas discharge means.

Further characteristics and advantages of the present invention will become better apparent from the detailed description of a preferred but not exclusive embodiment of a thermal treatment kiln particularly for ceramic articles, illustrated only by way of non-limitative example in the accompanying drawings, wherein:

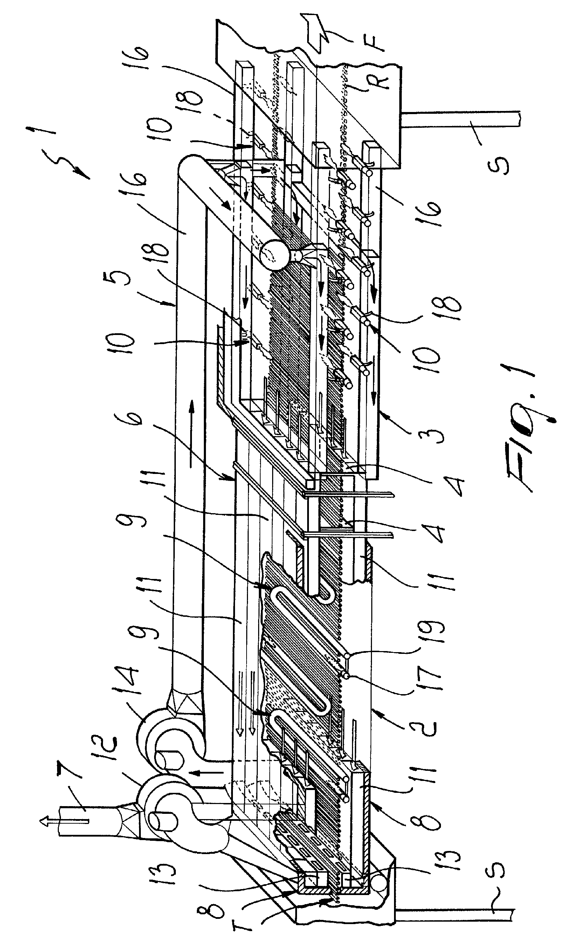

Figure 1 is a schematic side perspective view of a cutout of a portion of a kiln according to the invention;
Figure 2 is an exemplifying diagram of a first embodiment of the kiln according to the invention;
Figure 3 is an exemplifying diagram of a second embodiment of the kiln according to the invention;
Figure 4 is an exemplifying diagram of a third embodiment of the kiln according to the invention.

With reference to the figures, the reference numeral 1 generally designates a kiln for the thermal treatment of ceramic articles.

The kiln 1 is of the continuous type with rollers: inside it, the ceramic articles, not shown, advance in the direction indicated by the arrows F on a conveyance line constituted by a bed T of motorized rollers R.

The kiln 1 comprises a structure S for supporting a plurality of consecutive sectors inside which the successive steps of said thermal treatment are performed.

These sectors include a first sector, which is constituted by a first chamber 2, and a second sector, which is constituted by a second chamber 3.

A first so-called preheating step is performed inside the first chamber 2 and consists in gradually heating the articles to a preset temperature; a second so-called firing step is performed inside the second chamber 3 and consists in reaching the maximum treatment temperature and in keeping the articles at this maximum temperature for a preset time.

The first chamber 2 and the second chamber 3 are consecutive, are crossed in succession by the articles, and are separated one another by barriers 4 at a specific temperature of transition from the preheating step to the firing step; the gases generated inside the first chamber 2 are therefore distinct or separated with respect to the gases generated inside the second chamber 3.

The kiln 1 further comprises a first aspirator system 5 for the gases generated inside the first chamber 2 and a second aspirator system 6 for the gases generated inside the second chamber 3; the two systems 5 and 6 are adapted for the differentiated treatment of the gases aspirated by them.

The kiln 1 further comprises discharge means constituted by a stack 7 for the treated gases.

In the figures, the path followed by the gases aspirated from the first chamber 2 is indicated by the dark arrows, while the path followed by the gases aspirated from the second chamber 3 is indicated by the white arrows.

During the preheating step, the components of the ceramic articles, including the raw materials, impurities, organic additives (vehicles for screen printing, binders, fluidizers, fixing agents) present in the mix and/or in any decorative layers and the like, undergo transformations and/or take part in reactions as a consequence of which pollutants, such as e.g. NOx and organic compounds (CyHxO) are generated and released inside the first chamber 2.

The transition temperature at which the first chamber 2 and the second chamber 3 are separated by the barriers 4 is higher than, or equal to, the maximum generation temperature, i.e., in the ceramics jargon, the maximum degassing temperature of said pollutants.

Laboratory analyses have shown that the maximum generation temperature of a significant quantity of the pollutants is between 400 and 650 °C; the temperature for transition from the preheating step to the firing step and therefore for separation of the first chamber 2 from the second chamber 3 is greater than said maximum generation temperature.

The first chamber 2 performs indirect heating of the ceramic articles; on its upper and lower walls in fact a muffle 8 is provided, inside which the gases aspirated from the second chamber 3 and directed toward the stack 7 are conveyed in countercurrent with respect to the advancement motion of the articles, said stack being advantageously arranged upstream of the first chamber 2.

Multiple radiant burners 9 are arranged inside the first chamber 2 and their hot combustion gases flow inside radiating pipes, which transfer heat to the articles before being introduced in the muffle 8, into which the gases aspirated from the second chamber 3 are fed.

The second chamber 3 performs direct heating of the articles; multiple open-flame burners 10 are in fact arranged inside it and are distributed above and below the bed T, and their hot combustion gases strike the advancing articles directly.

The gases generated inside the first chamber 2 are therefore essentially constituted by said pollutants (separated from the gases of the second chamber 3, while the combustion gases of the radiant burners 9 are discharged outside the first chamber 2 into the muffle 8 where the gases aspirated by the second chamber 3 flow); the gases generated inside the second chamber 3 are instead essentially constituted by the combustion products of the open-flame burners 10 and by any pollutants generated at temperatures higher than the temperature at which the first chamber 2 is separated from the second chamber 3 (600 - 650 °C).

The second aspirator system 6 comprises ducts 11 for collecting the gases generated inside the second chamber 3; said ducts extend inside the muffle 8 and are connected to the stack 7 with interposed aspirator means constituted by a fan 12.

The first aspirator system 5 comprises pipes 13 for collecting the gases generated inside the first chamber 2; said pipes are connected to auxiliary aspirator means, which are constituted by auxiliary fans 14 adapted to convey the gases aspirated from the inside of the first chamber 2 to means for eliminating the pollutants contained therein.

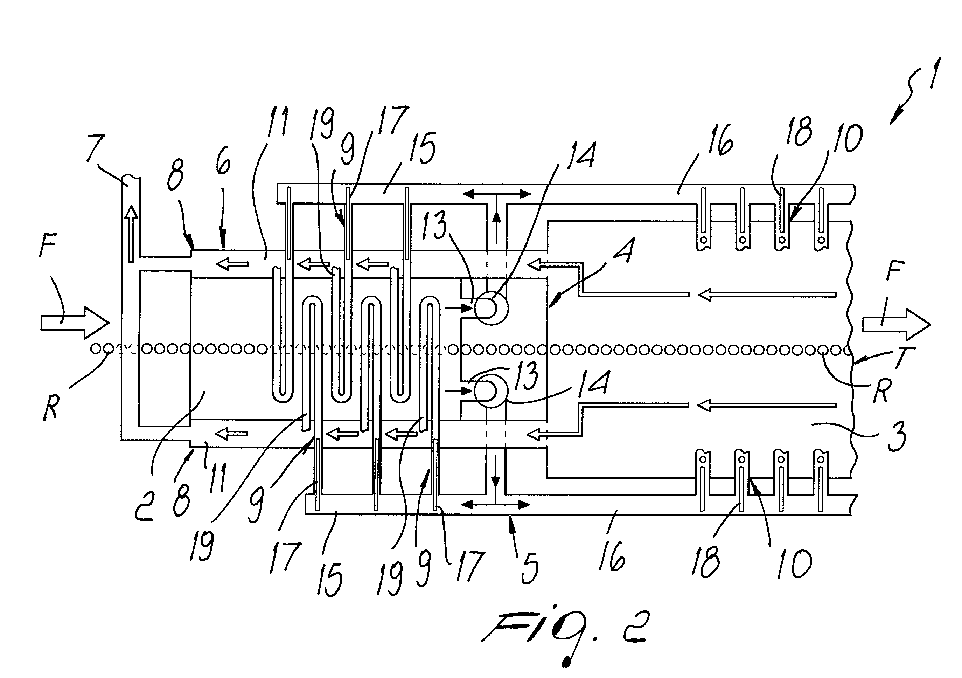

In a first embodiment of the kiln 1 (Figure 2), said elimination means are constituted by the radiant burners 9 of the first chamber 2 and by the open-flame burners 10 of the second chamber 3; the auxiliary fans 14 convey the gases generated in the first chamber 2 toward manifolds 15 and distribution pipes 16, which are respectively connected to the ducts 17 and 18 for feeding the comburent to the radiant burners 9 and to the open-flame burners 10.

The pollutants, used as comburent, are eliminated by combustion by means of the burners and in particular in the case of the radiant burners 9 the pollutants are eliminated inside the burners themselves, in which the necessary temperatures and retention times are reached; in the case of the open-flame burners 10, the pollutants are eliminated inside the second chamber 3 at the regions where the necessary temperatures are reached.

The radiant burners 9 have ducts 19 for the outflow of the combustion products to be discharged which are connected to the ducts 11 for collecting the gases of the second chamber 3 which are accommodated in the muffle 8.

Advantageously but not necessarily, the exhaust gases of the radiant burners 9 are discharged together with the gases aspirated from the second chamber 3 through the stack 7 in order to allow better recuperation of the heat of said gases in order to preheat the articles.

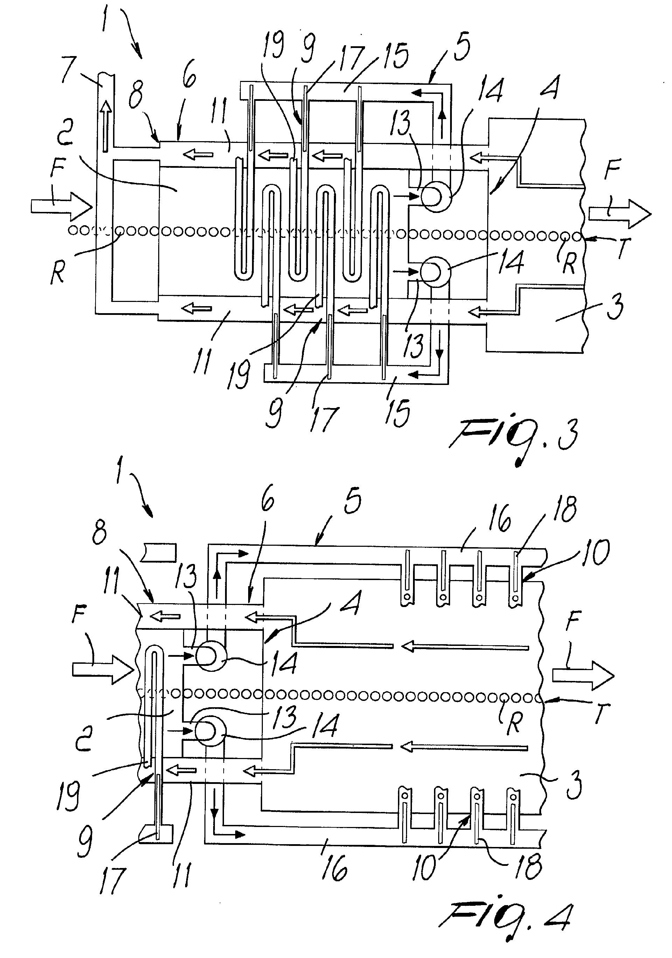

In a second embodiment of the kiln 1 (Figure 3), the pollutant elimination means are constituted only by the radiant burners 9; in a third embodiment of the kiln 1 (Figure 4), the elimination means are constituted only by the open-flame burners 10; in a fourth embodiment of the kiln 1, not shown, the pollutant elimination means are constituted by a post-combustion unit, optionally of the regenerative type; the pollutants are burned and eliminated by the post-combustion unit.

The first aspirator system 5 is further provided with temperature adjustment means, which are adapted to keep the average temperature of the gases aspirated from the first chamber 2 higher than, or equal to, the maximum condensation temperature of said gases and comprise optional auxiliary burners inserted in the fume ducts.

Laboratory analyses show that the condensation temperature is between 200 and 400 °C.

In practice it has been found that the described invention achieves the intended aim and objects, i.e. it provides a thermal treatment kiln particularly for ceramic articles which allows to reduce atmospheric pollution and environmental impact of exhaust gases, with limited heat and energy consumption and with very low operation costs.

The kiln according to the invention in fact allows to separate the gases that contain the pollutants to be oxidized, which arrive from preheating, from gases that are substantially devoid of said substances originating from firing, and therefore treat them adequately and in a differentiated manner; the pollutants to be oxidized can be eliminated both by using them as comburent for the burners of said kiln, and this accordingly entails a significant energy saving, and by treating them in a post-combustion unit, with considerably low costs thanks to the limited volumes to be treated.

The invention thus conceived is susceptible of numerous modifications and variations, all of which are within the scope of the appended claims.

All the details may further be replaced with other technically equivalent ones.

In practice, the materials used, as well as the shapes and dimensions, may be any according to requirements without thereby abandoning the scope of the protection of the appended claims.

The disclosures in Italian Patent Application No. MO2001A000018 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A thermal treatment kiln, particularly for ceramic articles, comprising a structure (S) for supporting at least one first sector (2) and one second sector (3) inside which the thermal treatment is carried out in a first step and a second step, respectively, said sectors (2, 3) being consecutive and being crossed in succession by the ceramic articles, **characterized in that** said first (2) and second (3) sectors are separated one another and **in that** it comprises a first aspirator system (5) and a second aspirator system (6), which are adapted for the differentiated treatment of the gases generated respectively in said first sector (2) and in said second sector (3), and gas discharge means (7).

2. The kiln according to claim 1, **characterized in that** said first (2) and second (3) sectors are separated at a specific temperature of transition from the first step to the second step.

3. The kiln according to one or more of the preceding claims, **characterized in that** said first step consists in gradually heating the ceramic components and **in that** said second step consists in reaching the maximum temperature of said treatment and in keeping the ceramic components at said maximum treatment temperature for a preset time.

4. The kiln according to one or more of the preceding claims, **characterized in that** said transition temperature is greater than, or equal to, the maximum temperature at which the ceramic articles, during said first step, generate oxidizable pollutants.

5. The kiln according to one or more of the preceding claims, **characterized in that** said first sector (2) is of the type with indirect heating of the ceramic articles, the gases generated inside it containing said pollutants.

6. The kiln according to one or more of the preceding claims, **characterized in that** said second aspirator system (6) comprises aspirator means which are adapted to convey to said discharge means (7) at least the gases generated in said second sector (3).

7. The kiln according to one or more of the preceding claims, **characterized in that** said first aspirator system (5) comprises auxiliary aspirator means (14), which are adapted to convey the gases generated inside said first sector (2) to means for eliminating said pollutants (9).

8. The kiln according to one or more of the preceding claims, **characterized in that** said first sector is constituted by a first chamber (2), which is crossed by the ceramic articles that advance along a conveyance line (R) and whose walls comprise a muffle (8) for the countercurrent flow of the gases aspirated from said second sector (3) and directed toward said discharge means (7), which are arranged substantially upstream of said first sector (2), for the indirect heating of said ceramic articles.

9. The kiln according to one or more of the preceding claims, **characterized in that** said first sector (2) comprises burners (9) of the radiant type, arranged inside said first chamber (2) and adapted for the indirect heating of said ceramic articles.

10. The kiln according to one or more of the preceding claims, **characterized in that** said second sector is constituted by a second chamber (3) which is crossed by said ceramic articles that advance along said conveyance line (R) and is provided with burners (10) of the open-flame type, which are adapted to directly heat said ceramic articles.

11. The kiln according to one or more of the preceding claims, **characterized in that** said second aspirator system (6) comprises fume collection ducts (11) which run inside said second sector (3), extend inside said muffle (8) of first sector, and are connected, with aspirator means (12) interposed, to said discharge means.

12. The kiln according to one or more of the preceding claims, **characterized in that** said elimination means comprise said radiant-type burners (9), auxiliary aspirator means (14) being provided to convey the gases generated in said first sector (2) into the manifolds (15) for distributing the comburent that supplies said radiant-type burners (9), the pollutants being eliminated by combustion by said radiant-type burners (9).

13. The kiln according to one or more of the preceding claims, **characterized in that** said radiant-type burners (9) comprise ducts (19) for the discharge of the waste products, said ducts (19) being connected to said fume collection ducts (11) that lie in said second sector (3).

14. The kiln according to one or more of the preceding claims, **characterized in that** said elimination means comprise said open-flame burners (10), said auxiliary aspirator means (14) being adapted to convey the gases generated in said first sector (2) into pipes (16, 17, 18) for distributing the comburent supplied to said open-flame burners (10), said pollutants being eliminated by combustion by said open-flame burners (10).

15. The kiln according to one or more of the preceding claims, **characterized in that** the pollutant elimination means comprise a post-combustion unit adapted to eliminate said pollutants by combustion.

16. The kiln according to one or more of the preceding claims, **characterized in that** the transition temperature is between 400 and 650 °C.

17. The kiln according to one or more of the preceding claims, **characterized in that** said first aspirator system (5) is provided with temperature adjustment means adapted to keep the average temperature of the gases aspirated from said first sector (2) higher than, or equal to, the maximum condensation temperature of said gases.

18. The kiln according to one or more of the preceding claims, **characterized in that** the gas condensation temperature is between 200 and 400 °C.
